# FASCICULE DE BREVET EUROPEEN

(11) **EP 3 615 363 B1**
(45) Date de publication et mention de la délivrance du brevet: **13.09.2023**
(21) Numéro de dépôt: 18724976.8
(22) Date de dépôt: 25.04.2018
(51) Int. Cl.: B60J 10/273

(54) **MODULE D'ÉTANCHÉITÉ POUR UN VÉHICULE AUTOMOBILE ET SON MONTAGE**
DICHTUNGSMODUL FÜR EIN KRAFTFAHRZEUG UND SEINE MONTAGE
SEALING MODULE FOR A MOTOR VEHICLE AND ITS ASSEMBLY

(30) Priorité: 25.04.2017 FR 1753558
(43) Date de publication de la demande: 04.03.2020
(73) Titulaire: Hutchinson, 75008 Paris (FR)
(72) Inventeur: BLOTTIAU, Olivier, 45120 Cepoy (FR); SKRABURSKI, Eddy, 45200 Montargis (FR); MCDONALD, Robert, Commerce Township Michigan MI 48382 (US); TALLENT, Jack, Michigan Michigan 48331 (US)
(74) Mandataire: Gevers & Orès
(86) Numéro de dépôt international: PCT/FR2018/051050
(87) Numéro de publication internationale: WO 2018/197813

(56) Documents cités:
- WO-A2-2007/022355
- DE-A1-102016 114 291
- FR-A1- 2 732 927
- US-A1- 2002 152 686
- US-B2- 9 403 491

## Description

### DOMAINE TECHNIQUE

La présente invention concerne notamment un module d'étanchéité pour un véhicule automobile, et son montage, par exemple pour la réalisation d'une porte de véhicule.

### ETAT DE L'ART

L'état de l'art comprend notamment les documents FR-A1-2 858 950, US-A1-2002/152686, FR-A1-2 732 927, DE 10 2016 114291 A1 et WO-A2-2007/022355.

Par définition, un module d'étanchéité pour un véhicule automobile est un élément modulaire qui est destiné à assurer une étanchéité, par exemple à l'eau. Dans le cadre de la présente demande, l'élément est destiné à coopérer à l'étanchéité avec au moins un autre élément tel que par exemple une vitre, fixe ou mobile, du véhicule, pour empêcher le passage d'eau voire de saletés entre l'élément et la vitre. L'élément est modulaire car il est conçu pour faciliter son montage sur le bâti d'une porte ou d'un véhicule, par un ouvrier d'un constructeur automobile par exemple. Un « module » ou élément modulaire étant un ensemble de pièces ou parties préalablement assemblées destiné à être livré à un constructeur pour être utilisé et monté tel quel sur un bâti du véhicule ou d'une porte du véhicule.

Il existe plusieurs types de module d'étanchéité pour véhicule. Il peut s'agir par exemple d'un module d'étanchéité de vitre fixe, un lécheur, une coulisse, etc.

Un module d'étanchéité de vitre fixe de véhicule automobile est destiné à former une partie fixe d'une porte du véhicule et comprend en général un cadre entourant au moins en partie une vitre fixe. Ce cadre comporte au moins un profilé qui s'étend le long d'un bord de la vitre et se prolonge au-delà de ce bord pour former un profilé de guidage d'une vitre coulissante de la porte.

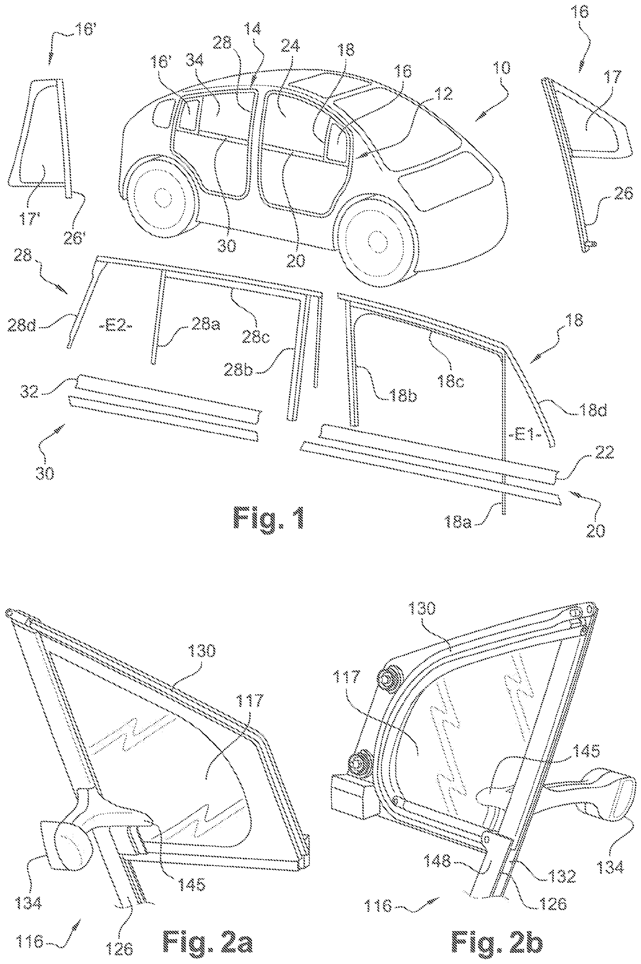

La figure 1 montre un véhicule automobile 10 dont les portes avant 12 et arrière 14 sont équipées de tels modules 16, 16'.

Le module d'étanchéité 16 de la porte avant est en général situé à l'avant de la porte avant 12. La vitre fixe 17 du module 16 est destinée à être agencée dans un espace E1 délimité par une coulisse 18 d'une part, et par un lécheur 20 d'autre part. Le lécheur 20 s'étend horizontalement et comprend un joint d'étanchéité 22 coopérant avec une surface extérieure d'une vitre coulissante 24 de la porte 12. La coulisse 18 comprend deux brins verticaux 18a, 18b dont les extrémités supérieures sont reliées entre elles par un brin horizontal 18c. La coulisse 18 peut comprendre en outre un brin avant 18d dans le prolongement du brin horizontal supérieur 18c, ce brin avant s'étendant sensiblement vers le bas et vers l'avant. L'espace E1 est délimité par une portion supérieure du brin vertical avant 18a, le brin avant 18d, et une portion avant du lécheur 20. Dans certaines variantes, le brin avant 18d n'est pas une partie de la coulisse 18, mais est directement intégré au cadre de la vitre fixe du module 16. La vitre fixe 17 a ici une forme générale triangulaire et le profilé 26 précité du cadre de cette vitre s'étend le long d'un bord vertical arrière de la vitre 17, le long du brin vertical avant 18a. En particulier, ce brin vertical avant 18a peut être fixé sur le profilé, en étant par exemple engagé dans une gorge longitudinale de ce dernier.

De façon similaire, le module d'étanchéité 16' de la porte arrière est en général situé à l'arrière de la porte arrière 14. La vitre 17' du module 16' est destiné à être agencé dans un espace E2 délimité par une coulisse 28 d'une part, et par un lécheur 30 d'autre part. Le lécheur 30 s'étend horizontalement et comprend un joint d'étanchéité 32 coopérant avec une surface extérieure d'une vitre coulissante 34 de la porte 14. La coulisse 28 comprend deux brins verticaux 28a, 28b dont les extrémités supérieures sont reliées entre elles par un brin horizontal 28c. La coulisse 28 peut comprendre en outre un brin arrière 28d dans le prolongement du brin horizontal supérieur 28c, ce brin arrière s'étendant sensiblement vers le bas et vers l'arrière. L'espace E2 est délimité par une portion supérieure du brin vertical arrière 28a, éventuellement le brin arrière 28d, et une portion arrière du lécheur 30. La vitre fixe 17' a ici une forme générale trapézoïdale (mais peut avoir une autre forme en demi lune, rectangulaire ou triangulaire suivant la ligne de style du véhicule) et le profilé 26' précité du cadre de cette vitre s'étend le long d'un bord vertical avant de la vitre 17', le long du brin vertical arrière 28a. En particulier, ce brin vertical arrière 28a peut être fixé sur le profilé, en étant par exemple engagé dans une gorge longitudinale de ce dernier.

Classiquement, une porte de véhicule automobile est équipée d'un rétroviseur. Un rétroviseur peut être monté au niveau du module de vitre fixe de la porte. Dans ce cas, le rétroviseur est monté à la fin de la réalisation de la porte, c'est-à-dire après le montage sur le bâti de la porte du module de vitre fixe, de la coulisse, du lécheur, de la vitre coulissante, de son moteur d'actionnement, etc.

Une porte de véhicule automobile peut être équipée d'un équipement électronique, tel qu'une caméra, un répétiteur de clignotant, un radar de proximité, etc. Comme c'est le cas du rétroviseur, cet équipement est généralement monté à la fin de la réalisation de la porte.

La technologie actuelle présente des inconvénients. En effet, l'étape de montage de l'équipement électronique est une étape supplémentaire à la réalisation de la porte, qui peut être longue et complexe pour la fixation de cet équipement et son raccordement électrique au circuit électrique du véhicule. Elle suppose pour le constructeur la gestion de nombreux composants distincts.

L'invention propose un perfectionnement à cette technologie, qui apporte une solution simple, efficace et économique au problème précité.

### EXPOSE DE L'INVENTION

L'invention propose un module d'étanchéité pour un véhicule automobile, selon la revendication 1.

Dans la présente demande, on entend par profilé de forme allongée, une pièce qui a en section transversale une forme constante ou non sur toute sa longueur ou dimension longitudinale. Ce type de pièce peut être réalisé par extrusion, pour avoir une forme constante en section, mais peut aussi être réalisé par injection moulage pour avoir une forme évolutive en section, deux formes spécifiques consécutives en section, etc.

L'invention propose ainsi d'intégrer les moyens de support d'un équipement électronique, voire l'équipement électronique lui-même, au module d'étanchéité. On comprend ainsi que ces moyens de support seront montés sur le bâti de la porte en même temps que le module d'étanchéité, ce qui permet de supprimer une étape de la technique antérieure, et représente donc un gain de temps significatif pour la réalisation d'une porte complète.

Le module selon l'invention peut comprendre une ou plusieurs des caractéristiques suivantes, prises isolément les unes des autres ou en combinaison les unes avec les autres :
- ledit joint s'étend au moins en partie le long dudit profilé,
- ledit profilé est un enjoliveur comportant au moins une surface extérieure destinée à être visible par un utilisateur dudit véhicule,
- ledit module est un lécheur de vitre, ledit joint d'étanchéité étant configuré pour coopérer avec une vitre coulissante dudit véhicule,
- ledit profilé comporte un bossage sur ladite surface extérieure, dans lequel ledit équipement électronique est destiné à être logé,
- ledit profilé et ledit joint sont réalisés par co-extrusion, multi-injection ou surmoulage, ou sont préassemblés,
- ledit module comporte un cadre entourant au moins en partie une vitre fixe, ledit profilé faisant partie dudit cadre ou étant rapporté sur ledit cadre, et de préférence prémonté sur ou partiellement enrobé par celui-ci,
- ledit profilé s'étend le long d'un bord de ladite vitre fixe et se prolonge au-delà de ce bord pour former un profilé de guidage destiné à guider une vitre coulissante dudit véhicule,
- lesdits moyens de support sont au moins en partie formés d'une seule pièce avec ledit profilé,
- le module comprend en outre un équipement électronique monté sur ou dans lesdits moyens de support ; on comprend dès lors que les moyens de support de l'équipement électronique, mais aussi l'équipement électronique lui-même, sont intégrés au module d'étanchéité, ce qui est particulièrement avantageux pour réduire le temps nécessaire à la réalisation d'une porte par exemple,
- ledit équipement électronique comprend au moins un capteur, de préférence sans contact,
- ledit équipement électronique comprend au moins un capteur optique ; le capteur peut être à la fois sans contact et optique,
- ledit équipement électronique est ou comprend une caméra, un répétiteur de clignotant, un capteur de détection d'information ou de signal, ou un radar de proximité,
- ledit équipement électronique est raccordé à une première extrémité d'un câble électrique dont une seconde extrémité opposée est raccordée à au moins une fiche de raccordement électrique; ceci permet de faciliter le raccordement électrique de l'équipement, l'équipement étant par exemple situé à l'extérieur de la porte ou du véhicule et sa fiche de raccordement étant, dès le montage du module d'étanchéité, disposé à l'intérieur de la porte ou du véhicule,

La présente invention concerne également un procédé de réalisation d'une porte de véhicule automobile, au moyen d'un module tel que décrit ci-dessus, comprenant une étape de montage dudit module équipé desdits moyens de support, voire dudit équipement électronique, sur un bâti dudit véhicule ou d'une porte dudit véhicule.

Avantageusement, le procédé comprend une étape suivante de montage d'une coulisse sur ledit bâti de porte, pour le guidage d'une vitre coulissante de ladite porte, ladite coulisse comportant un brin vertical fixé audit profilé dudit module.

Lorsque le module comprend une fiche de raccordement électrique telle que décrite précédemment, lesdits moyens de support sont situés sur un côté extérieur de ladite porte, et ladite fiche est située sur un côté intérieur de ladite porte.

Dans un cas particulier de réalisation de l'invention, le procédé comprend une étape de montage d'un module de vitre fixe sans son enjoliveur, une étape de prémontage de l'enjoliveur (une partie connectique est glissée dans une partie correspondante d'un profilé du module), une étape de montage d'une coulisse (et en particulier d'un brin vertical de coulisse), et une étape d'encliquetage définitif de l'enjoliveur par-dessus le brin vertical de coulisse.

La présente invention concerne encore un véhicule automobile, comportant au moins un module d'étanchéité tel que décrit ci-dessus. Le module d'étanchéité est par exemple un module de vitre fixe sur porte ou caisse (en une partie ou deux parties, c'est-à-dire avec un enjoliveur rapporté ou non), un lécheur, une coulisse, un joint de cadre qui assure une étanchéité entre une porte et le bâti du véhicule, un joint de toit ouvrant, un joint de pare-brise, un joint de lunette arrière, etc.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un véhicule automobile, ainsi que des différents éléments ou modules d'étanchéité de ses portes,
- les figures 2a et 2b sont des vues schématiques partielles en perspective d'un module d'étanchéité selon l'invention,
- les figures 3a et 3b sont des vues schématiques partielles d'un profilé et de moyens de support d'un équipement électronique, du module des figures 2a et 2b,
- les figures 4a et 4b sont des vues schématiques en perspectives d'un capot du module des figures 2a et 2b,
- la figure 5 est une vue schématique partielle en perspective d'un module d'étanchéité qui ne forme pas partie de l'invention,
- la figure 6a est une vue schématique partielle, en perspective et partiellement éclatée du module de la figure 5,
- la figure 6b est une vue schématique en perspective de l'enjoliveur et de l'équipement électronique du module de la figure 5,
- la figure 6c est autre une vue schématique partielle en perspective de l'enjoliveur et de l'équipement électronique du module de la figure 5,
- les figures 7a à 7c sont des vues schématiques partielles en perspective d'un module d'étanchéité qui ne forme pas partie de l'invention,
- la figure 8 est une vue schématique partielle en perspective d'un module d'étanchéité qui ne forme pas partie de l'invention,
- la figure 9 est une vue schématique en coupe transversale d'un module d'étanchéité du type lécheur,
- les figures 10a et 10b sont des vues similaires à celles de la figure 1 et montrent des exemples d'implantation d'équipements électroniques sur des modules d'étanchéité du véhicule,
- la figure 11 est une vue schématique en perspective d'un module d'étanchéité qui ne forme pas partie de l'invention,
- la figure 12 est une vue à plus grande échelle d'une partie de la figure 11, et
- la figure 13 est une vue schématique en coupe transversale d'un module d'étanchéité du type joint de cadre.

### DESCRIPTION DETAILLEE

La figure 1 a été décrite dans ce qui précède.

Les figures 2a à 4b illustrent un premier mode de réalisation de l'invention.

Le module d'étanchéité 116 comprend un cadre 130 entourant une vitre fixe 117 et comportant au moins un profilé 126 s'étendant le long d'un bord de la vitre et se prolongeant au-delà de ce bord pour former un profilé de guidage destiné à guider une vitre coulissante d'une porte de véhicule. Le cadre 130 comprend ou est équipé d'un joint d'étanchéité coopérant avec la vitre fixe 117.

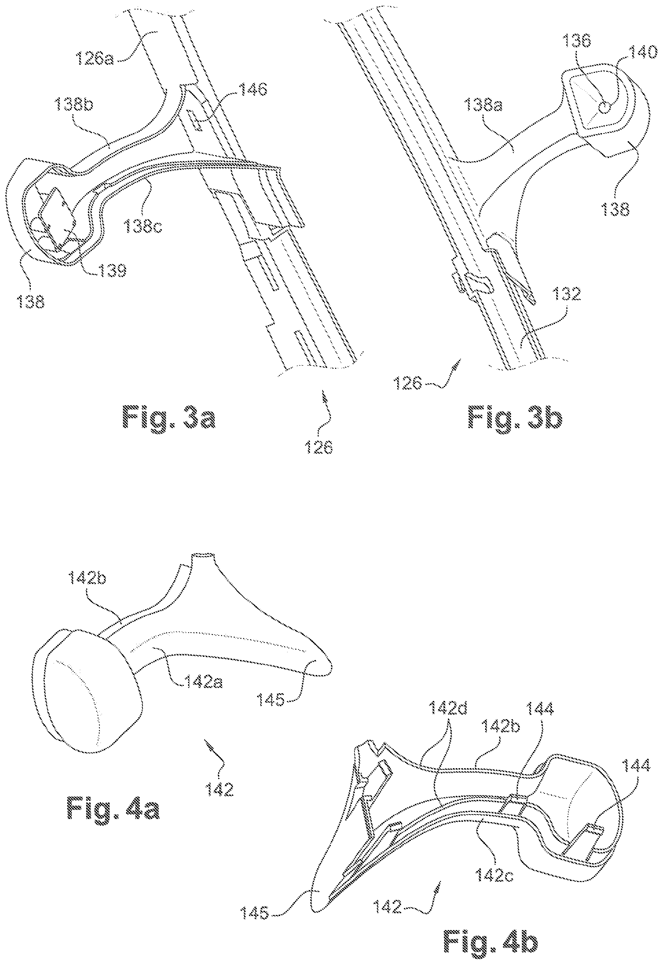

La vitre 117 a ici une forme générale trapézoïdale mais pourrait avoir n'importe quelle autre forme. Le profilé 126 s'étend le long de la grande base de la vitre et a en section transversale une forme générale en U pour définir une gorge longitudinale 132, mieux visible à la figure 3b. Un brin vertical d'une coulisse est destiné à être logé dans cette gorge 132, ce brin vertical étant destiné à coopérer à étanchéité avec la vitre coulissante de la porte.

Le profilé 126 est formé d'une seule pièce avec une première partie de moyens de support 134 d'un équipement électronique 136, qui est par exemple une caméra.

Cette première partie se présente sous la forme d'un bras 138 de forme allongée dont une extrémité longitudinale est reliée au profilé 126, et dont une extrémité longitudinale opposée est libre et porte l'équipement électronique 136.

Le bras 138 est en saillie sur le profilé. Il s'étend sensiblement le long d'un axe longitudinal qui est sensiblement perpendiculaire à l'axe longitudinal du profilé 126 et/ou au plan de la vitre 117.

Le bras 138 a en section transversale une forme générale en U, c'est-à-dire qu'il est ouvert ici vers l'avant. Il comprend une paroi arrière 138a, et deux parois latérales, respectivement supérieure 138b et inférieure 138c. La paroi supérieure 138b est reliée à une paroi latérale 126a du profilé et la paroi inférieure 138c est reliée à cette paroi 126a et est plus large que la paroi supérieure de façon à s'étendre sur une portion de la vitre.

Dans l'exemple représenté, le bras 138 a une forme générale d'altère dont les deux extrémités longitudinales sont élargies ou surdimensionnées. L'extrémité longitudinale libre du bras 138 est ainsi surdimensionnée pour accueillir une carte 139 de circuit imprimé qui supporte la caméra. L'objectif de cette caméra est en regard d'un orifice 140 de cette extrémité longitudinale du bras, qui est situé sur sa paroi arrière 138a. Comme on le voit à la figure 3b, l'orifice 140 est situé au fond d'une bassine de la paroi 138a.

Les figures 4a et 4b représentent une seconde partie des moyens de support qui se présente sous la forme d'un capot 142 destiné à être rapporté et fixé, ici par encliquetage élastique, sur le bras 138. Le capot 142 est destiné à fermer le bras 138 par l'avant. Il a ainsi une forme générale complémentaire de celle du bras. Il a notamment en section transversale une forme générale en U et comprend une paroi avant 142a, et deux parois latérales, respectivement supérieure 142b et inférieure 142c.

Les parois 142b et 142c comprennent des rebords d'emboîtement 142d destinés à coopérer avec les parois 138b, 138c du boîtier, et comprennent en outre des pattes d'encliquetage élastique 144.

Le capot 142 a également une forme générale d'altère dont les deux extrémités longitudinales sont élargies ou surdimensionnées. L'extrémité longitudinale du capot, située du côté de la vitre 117, forme une embase 145 ou traîne destinée à recouvrir en partie la vitre.

Bien que cela ne soit pas visible, un câble électrique d'alimentation électrique de la caméra est relié par une extrémité à la carte 139, et par une autre extrémité à une fiche de raccordement électrique. Ce câble peut traverser un orifice 146 du profilé 126, débouchant dans la cavité interne du bras (figure 3a), et s'étendre au moins en partie le long du profilé pour ressortir par un autre orifice 148 du profilé (figure 2b). Ainsi, la caméra se trouve d'un côté extérieur de la vitre 117 alors que sa fiche se trouve d'un côté intérieur de la vitre.

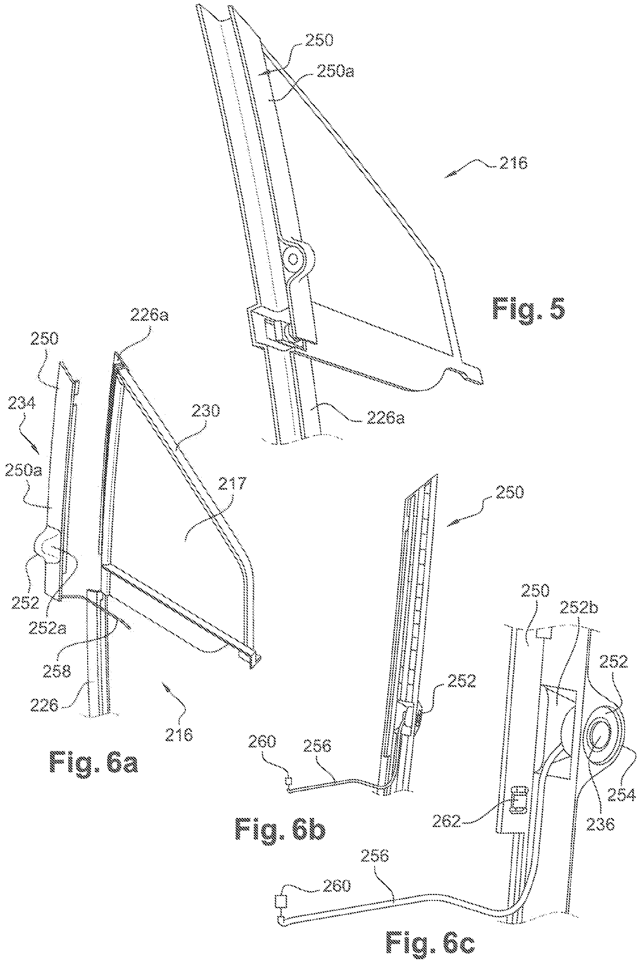

Les figures 5 à 6c illustrent un second mode de réalisation qui ne forme pas partie de l'invention.

Le module d'étanchéité 216 comprend un cadre 230 entourant une vitre fixe 217 et comportant au moins un profilé 226 s'étendant le long d'un bord de la vitre et se prolongeant au-delà de ce bord pour former un profilé de guidage destiné à guider une vitre coulissante d'une porte de véhicule. Le cadre 230 comprend ou est équipé d'un joint d'étanchéité coopérant avec la vitre fixe 217.

La vitre 217 a ici une forme générale trapézoïdale mais pourrait avoir n'importe quelle autre forme. Le profilé 226 s'étend le long de la grande base de la vitre 117 et a en section transversale sur au moins une partie de sa hauteur une forme générale en U pour définir une gorge longitudinale de réception d'un brin vertical de coulisse. Sur le reste de sa hauteur, en particulier en partie haute, le profilé 226 peut avoir une section en forme de L.

Des moyens 234 de support d'un équipement électronique 236, tel qu'une caméra, sont ici rapportés et fixés sur le cadre 230 et plus particulièrement sur le profilé 226.

Ces moyens de support 234 se présentent ici sous la forme d'un enjoliveur 250 de forme allongée qui est rapporté sur une paroi latérale 226a du profilé.

L'enjoliveur 250 s'étend sur une partie de la dimension longitudinale du profilé 226, correspondant à la partie visible du module 216 lorsque ce dernier est monté sur un bâti de porte de véhicule.

L'enjoliveur 250 comprend une surface extérieure 250a destinée à être visible par un utilisateur. Cette surface extérieure comprend un bossage 252 évidée dans lequel est logée la caméra. L'objectif de la caméra est en regard d'une ouverture arrière 254 du bossage 252. Le bossage 252 définit une surface extérieure 252a aérodynamique, raccordée à la surface extérieure 250a de l'enjoliveur.

La cavité interne 252b du bossage 252 est ouverte vers l'intérieur de l'enjoliveur 250 afin d'autoriser le passage d'un câble électrique 256 d'alimentation de la caméra. Ce câble 256 s'étend en partie le long de l'enjoliveur et traverse ensuite un orifice 258 du profilé 226 afin que sa fiche 260 de raccordement électrique soit située du côté intérieur du module.

Dans l'exemple représenté, l'enjoliveur 250 s'étend sensiblement sur toute la hauteur de la vitre 217, le long d'un bord arrière de ce dernier. Il peut être fixé au profilé 226 par encliquetage élastique et comprendre ainsi des pattes 262 d'encliquetage élastique réparties sur sa longueur.

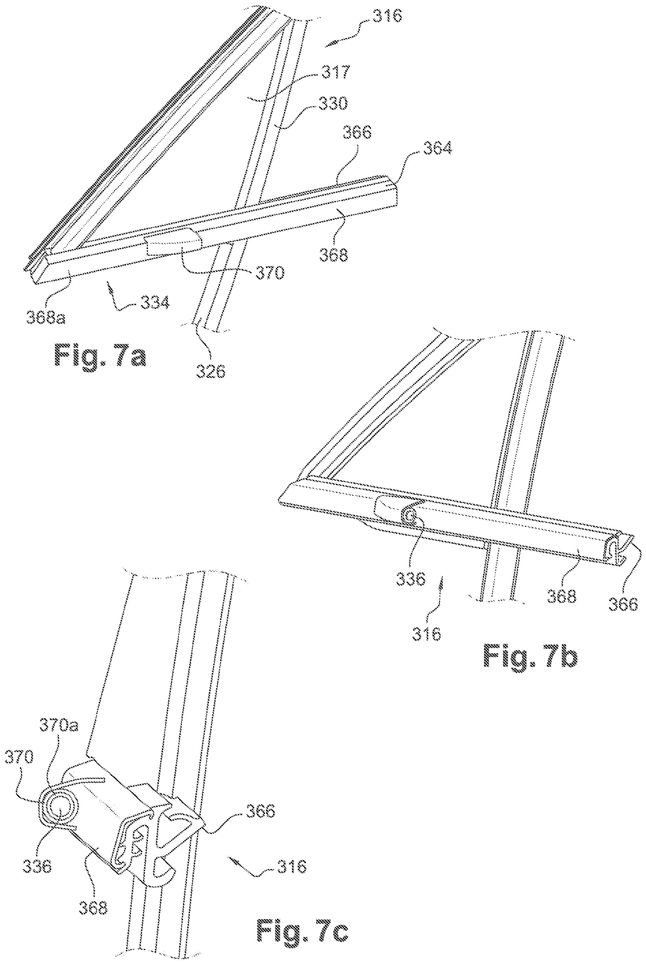

Les figures 7a à 7c illustrent un troisième mode de réalisation qui ne forme pas partie de l'invention.

Le module d'étanchéité 316 comprend un cadre 330 entourant une vitre fixe 317 et comportant au moins un profilé 326 s'étendant le long d'un bord de la vitre et se prolongeant au-delà de ce bord pour former un profilé de guidage destiné à guider une vitre coulissante d'une porte de véhicule. Le cadre 330 comprend ou est équipé d'un joint d'étanchéité coopérant avec la vitre fixe 317.

La vitre 317 a ici une forme générale triangulaire mais pourrait avoir n'importe quelle autre forme. Le profilé 326 s'étend le long d'un côté de la vitre et a en section transversale une forme générale en U pour définir une gorge longitudinale de réception d'un brin vertical de coulisse.

Des moyens 334 de support d'un équipement électronique 336, tel qu'une caméra, sont ici rapportés et fixés sur le cadre 330 et plus particulièrement sur un bord sensiblement horizontal de ce cadre.

Ces moyens de support 334 se présentent ici sous la forme d'un lécheur 364 de forme allongée qui est rapporté sur le bord précité du cadre 330 et qui s'étend dans le prolongement de ce bord, ici vers l'arrière.

Le lécheur 364 comprend un joint d'étanchéité 366 destiné à coopérer avec la vitre de la porte, et un enjoliveur 368 destiné à recouvrir ce joint.

L'enjoliveur 368 comprend une surface extérieure 368a destinée à être visible par un utilisateur. Cette surface extérieure 368a comprend un bossage 370 évidée dans lequel est logée la caméra. L'objectif de la caméra est en regard d'une ouverture arrière 370a du bossage. Le bossage 370 définit une surface extérieure aérodynamique, raccordée à la surface extérieure 368a de l'enjoliveur.

La cavité interne du bossage 370 est ouverte vers l'intérieur de l'enjoliveur afin d'autoriser le passage d'un câble électrique d'alimentation de la caméra, comme évoqué précédemment.

L'enjoliveur 368 peut être fixé au cadre 330 par encliquetage élastique.

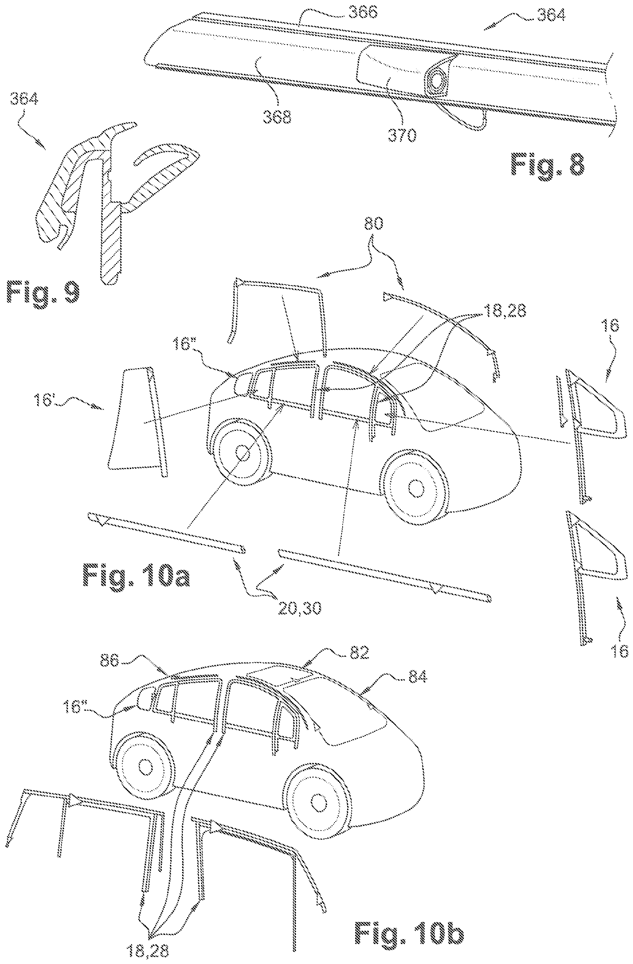

La figure 8 illustre une autre variante de réalisation qui ne forme pas partie de l'invention dans laquelle le module d'étanchéité est ici le lécheur 364 seul. Ce lécheur 364 comprend d'une part un joint 366 destiné à coopérer avec une vitre coulissante, et d'autre part un enjoliveur 368 formant un profilé et portant des moyens de support au sens de l'invention. Le lécheur 364 de la figure 8 est similaire à celui des figures 7a à 7c. Le lécheur 364 de la figure 8 est destiné à être monté sur une porte de véhicule indépendamment du module de vitre fixe de ce véhicule, alors que le lécheur 364 des figures 7a à 7c est monté concomitamment au module de vitre fixe.

Le lécheur 364 décrit dans ce qui précède peut être réalisé en rapportant l'enjoliveur 368 sur le joint d'étanchéité 366. L'enjoliveur et le joint peuvent être réalisés par extrusion, indépendamment l'un de l'autre. L'enjoliveur peut être métallique.

En variante, ils peuvent être réalisés par co-extrusion, injection, multi-injection, moulage rapporté, etc. C'est notamment le cas lorsque l'enjoliveur est réalisé en matière thermoplastique. La figure 9 montre un lécheur 364 monobloc.

Un module d'étanchéité ne formant pas partie de l'invention pourrait encore être une coulisse telle qu'une de celles 18, 28 représentées à la figure 1. Cette coulisse comprendrait alors au moins un joint d'étanchéité de vitre et au moins un profilé dont un serait solidaire de moyens de support d'un équipement électronique.

Les figures 10a et 10b montrent de manière schématique les emplacements par de petits triangles des équipements électroniques sur des modules d'étanchéité du véhicule. Comme évoqué dans ce qui précède, les modules d'étanchéité sont de tout type et par exemple des modules 16, 16' de vitre fixe sur porte ou caisse 16" (en une partie ou deux parties, c'est-à-dire avec un enjoliveur rapporté ou non), des lécheurs 20, 30, des coulisses 18, 28, des joints de cadre 80 qui assurent une étanchéité entre une porte et le bâti du véhicule, des joints 82 de toit ouvrant, des joints 84 de pare-brise, des joints 86 de lunette arrière, etc.

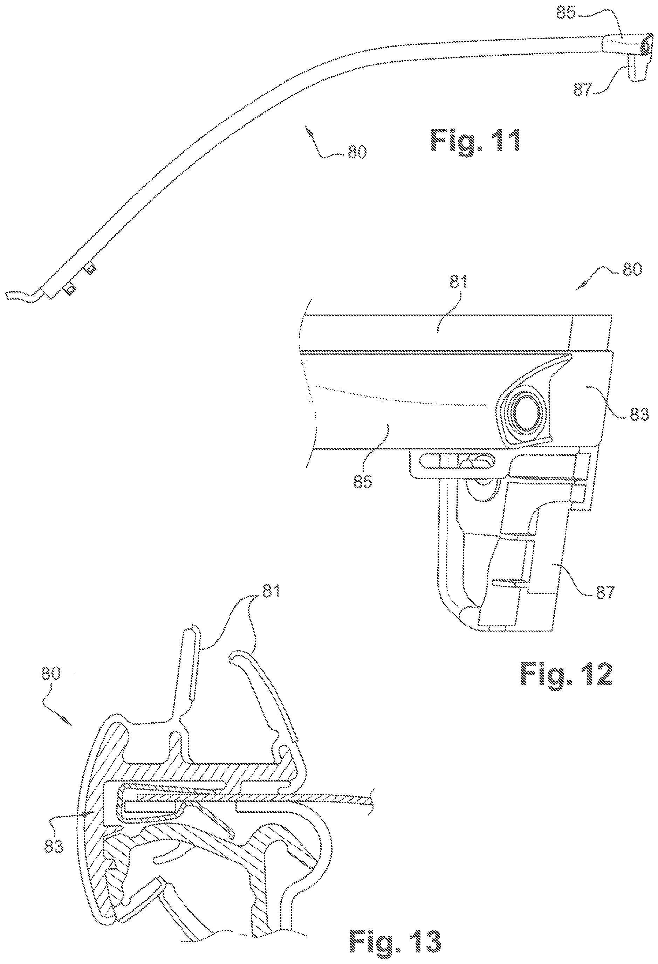

Les figures 11 et 12 illustrent une autre variante de réalisation qui ne forme pas partie de l'invention dans laquelle le module d'étanchéité est ici un joint de cadre 80. Le joint de cadre 80 a une forme allongée. Il est destiné à être monté sur une porte de véhicule et comprend au moins un joint 81 destiné à coopérer avec le bâti du véhicule lors de la fermeture de la porte. Il comprend en outre un profilé 83 de forme allongée, qui peut être réalisé simultanément au joint 81, par exemple par co-extrusion. Le joint 81 peut également être réalisé par surmoulage sur le profilé, ou assemblé dans une opération ultérieure. Le joint de cadre 80 comprend à son extrémité aval des moyens de support 85 au sens de l'invention. Ces moyens de support 85 sont similaires à ceux décrits dans ce qui précède en référence aux figures 7a à 8. Les moyens de support 85 peuvent être réalisés par bi-injection, extrusion, ou surmoulage. Les moyens de support 85 sont situés sur un côté extérieur du joint de cadre, au niveau d'une patte 87 de fixation et d'indexage située quant à elle sur un côté intérieur du joint de cadre 80. La figure 13 montre un joint de cadre 80 monobloc.

On comprend ainsi des différents modes de réalisation que le module d'étanchéité 116, 216, 316 est prééquipé d'un équipement électronique 136, 236, 336 tel qu'une caméra. La réalisation d'un véhicule ou d'une porte de véhicule s'en trouve facilitée car une opération de montage de cet équipement sur la porte n'est plus nécessaire.

En pratique, la réalisation d'une porte de véhicule peut comprendre notamment les étapes de montage du module 116, 216, 316 équipé de la caméra sur un bâti de la porte, et de montage de la coulisse sur le bâti, pour le guidage de la vitre coulissante de la porte. Les moyens de support 134, 234, 334 sont situés sur un côté extérieur de la porte, et la fiche 260 de raccordement électrique de la caméra est située sur un côté intérieur de ladite porte.

D'autres types d'équipements électroniques tels qu'un capteur, un radar, un répétiteur de clignotant, etc., peuvent également être utilisés pour prééquiper le module d'étanchéité selon l'invention, en plus de la caméra ou à la place de celle-ci.

## Revendications

1. Module d'étanchéité (116, 216, 316) pour un véhicule automobile, ce module comportant au moins un profilé (126, 226, 326) de forme au moins en partie allongée et au moins un joint d'étanchéité (366) configuré pour coopérer avec un élément dudit véhicule, tel qu'une vitre (117, 217, 317) dudit véhicule, le module comprenant en outre des moyens (134, 234, 334) de support d'au moins un équipement électronique (136, 236, 336) qui sont solidaires dudit profilé, lesdits moyens de support (134) comprenant un bras de support (138) qui a une forme générale allongée et comprend une première extrémité longitudinale reliée audit profilé (130) et une seconde extrémité longitudinale opposée dans lequel est destinée à être logé ledit équipement électronique (136), **caractérisé en ce qu'**il comprend un capot (142) rapporté sur le bras (138) et comprenant une portion longitudinale s'étendant le long du bras et/ou une embase (145) recouvrant une partie de ladite vitre (117).

2. Module (316) selon la revendication précédente, dans lequel ledit joint (366) s'étend au moins en partie le long dudit profilé (126, 226, 326).

3. Module (316) selon la revendication 1 ou 2, dans lequel ledit profilé est un enjoliveur (250, 368) comportant au moins une surface extérieure (250a, 368a) destinée à être visible par un utilisateur dudit véhicule.

4. Module (316) selon la revendication précédente, dans lequel ledit module est un lécheur (364) de vitre, ledit joint d'étanchéité (366) étant configuré pour coopérer avec une vitre coulissante (14, 24) dudit véhicule.

5. Module (116, 216, 316) selon la revendication 3 ou 4, dans lequel ledit profilé comporte un bossage (252, 370) sur ladite surface extérieure (250a, 368a), dans lequel ledit équipement électronique (236, 336) est destiné à être logé.

6. Module selon l'une des revendications précédentes, dans lequel ledit profilé (126, 226, 326) et ledit joint (366) sont réalisés par co-extrusion, multi-injection ou surmoulage, ou sont préassemblés.

7. Module selon l'une des revendications précédentes, dans lequel ledit module comporte un cadre (130, 230, 330) entourant au moins en partie une vitre fixe (117, 217, 317), ledit profilé (126, 226, 326) faisant partie dudit cadre ou étant rapporté sur ledit cadre, et de préférence prémonté sur ou partiellement enrobé par celui-ci.

8. Module (116) selon l'une des revendications précédentes, dans lequel lesdits moyens de support (134) sont au moins en partie formés d'une seule pièce avec ledit profilé (126).

9. Module (116) selon l'une des revendications précédentes, dans lequel ledit équipement électronique (136, 236, 336) comprend au moins un capteur, de préférence sans contact ou optique.

10. Module (116, 216, 316) selon l'une des revendications précédentes, dans lequel ledit équipement électronique (136, 236, 336) est ou comprend une caméra, un répétiteur de clignotant, un capteur de détection d'information ou de signal, ou un radar de proximité.

11. Procédé de réalisation d'un véhicule automobile, au moyen d'un module (116, 216, 316) selon l'une des revendications précédentes, comprenant une étape de montage dudit module (116, 216, 316) équipé desdits moyens de support (134, 234, 334), voire dudit équipement électronique (116, 216, 316), sur un bâti dudit véhicule ou d'une porte dudit véhicule.

12. Procédé selon la revendication précédente, dans lequel il comprend une étape suivante de montage d'une coulisse sur ledit bâti de porte, pour le guidage d'une vitre coulissante (14, 24) de ladite porte, ladite coulisse (18, 28) comportant un brin vertical (18a, 28a) fixé audit profilé dudit module.

13. Véhicule automobile, comportant au moins un module d'étanchéité selon l'une des revendications 1 à 10.

## Patentansprüche

1. Dichtungsmodul (116, 216, 316) für ein Kraftfahrzeug, wobei dieses Modul mindestens ein Profil (126, 226, 326) mindestens teilweise länglicher Form und mindestens einen Dichtungsring (366) umfasst, der dazu ausgelegt ist, mit einem Element des Fahrzeugs, wie etwa einer Scheibe (117, 217, 317) des Fahrzeugs, zusammenzuwirken, wobei das Modul weiter Stützmittel (134, 234, 334) mindestens einer elektronischen Ausrüstung (136, 236, 336) umfasst, die fest mit dem Profil verbunden sind, wobei die Stützmittel (134) einen Stützarm (138) umfassen, der eine allgemeine längliche Form aufweist und ein erstes Längsende aufweist, das mit dem Profil (130) verbunden ist, und ein zweites, gegenüberliegendes Längsende, das dazu vorgesehen ist, die elektronische Ausrüstung (136) aufzunehmen, **dadurch gekennzeichnet, dass** es eine Haube (142) umfasst, die am Arm (138) angebracht ist und einen Längsabschnitt umfasst, der sich entlang des Arms und/oder einer Basis (145), die einen Teil der Scheibe (117) bedeckt, erstreckt.

2. Modul (316) nach dem vorstehenden Anspruch, wobei sich der Ring (366) mindestens teilweise entlang des Profils (126, 226, 326) erstreckt.

3. Modul (316) nach Anspruch 1 oder 2, wobei das Profil eine Radkappe (250, 368) ist, die mindestens eine Außenfläche (250a, 368a) umfasst, die dazu vorgesehen ist, von einem Benutzer des Fahrzeugs sichtbar zu sein.

4. Modul (316) nach dem vorstehenden Anspruch, wobei das Modul ein Scheibenabstreifer (364) ist, wobei der Dichtungsring (366) dazu ausgelegt ist, mit einem Schiebefenster (14, 24) des Fahrzeugs zusammenzuwirken.

5. Modul (116, 216, 316) nach Anspruch 3 oder 4, wobei das Profil eine Erhöhung (252, 370) auf der Außenfläche (250a, 368a) umfasst, die dazu vorgesehen ist, die elektronische Ausrüstung (236, 336) aufzunehmen.

6. Modul nach einem der vorstehenden Ansprüche, wobei das Profil (126, 226, 326) und der Ring (366) durch Co-Extrusion, Multi-Injektion oder Umspritzung hergestellt sind oder vorab zusammengefügt sind.

7. Modul nach einem der vorstehenden Ansprüche, wobei das Modul einen Rahmen (130, 230, 330) umfasst, der mindestens teilweise eine feste Scheibe (117, 217, 317) umgibt, wobei das Profil (126, 226, 326) einen Teil des Rahmens bildet oder am Rahmen angebracht ist und vorzugsweise an diesem vorab montiert oder von diesem teilweise umhüllt ist.

8. Modul (116) nach einem der vorstehenden Ansprüche, wobei die Stützmittel (134) mindestens teilweise einstückig mit dem Profil (126) ausgebildet sind.

9. Modul (116) nach einem der vorstehenden Ansprüche, wobei die elektronische Ausrüstung (136, 236, 336) mindestens einen, vorzugsweise kontaktlosen oder optischen, Sensor umfasst.

10. Modul (116, 216, 316) nach einem der vorstehenden Ansprüche, wobei die elektronische Ausrüstung (136, 236, 336) eine Kamera, ein Blinklichtrepetitor, ein Informations- oder Signalerfassungssensor oder ein Nahbereichsradar ist oder umfasst.

11. Verfahren zur Herstellung eines Kraftfahrzeugs mittels eines Moduls (116, 216, 316) nach einem der vorstehenden Ansprüche, umfassend einen Schritt der Montage des Moduls (116, 216, 316), das mit den Stützmitteln (134, 234, 334), sogar mit der elektronischen Ausrüstung (116, 216, 316) ausgerüstet ist, auf ein Gestell des Fahrzeugs oder einer Tür des Fahrzeugs.

12. Verfahren nach dem vorstehenden Anspruch, wobei es einen folgenden Schritt der Montage einer Schiene am Türgestell zur Führung eines Schiebefensters (14, 24) der Tür umfasst, wobei die Schiene (18, 28) einen vertikalen Strang (18a, 28a) umfasst, der am Profil des Moduls befestigt ist.

13. Kraftfahrzeug, umfassend mindestens ein Dichtungsmodul nach einem der Ansprüche 1 bis 10.

## Claims

1. A sealing module (116, 216, 316) for a motor vehicle, this module comprising at least one profile section (126, 226, 326) of at least partly elongated shape and at least one seal gasket (366) configured to cooperate with an element of said vehicle, such as a window (117, 217, 317) of said vehicle, the module further comprising means (134, 234, 334) for supporting at least one electronic equipment (136, 236, 336) which are solidly connected to said profile section, said support means (134) comprising a support arm (138) which has a generally elongate shape and comprises a first longitudinal end connected to said profile section (130) and a second opposite longitudinal end in which said electronic equipment (136) is intended to be housed, **characterised in that** it comprises a cover (142) attached to the arm (138) and comprising a longitudinal portion extending along the arm and/or a base (145) covering part of said window (117).

2. The module (316) according to the preceding claim, wherein said gasket (366) extends at least partly along said profile section (126, 226, 326).

3. The module (316) according to claim 1 or 2, wherein said profile section is a trim element (250, 368) comprising at least one outer surface (250a, 368a) intended to be visible to a user of said vehicle.

4. The module (316) according to the preceding claim, wherein said module is a window licker (364), said seal gasket (366) being configured to cooperate with a sliding window (14, 24) of said vehicle.

5. The module (116, 216, 316) according to claim 3 or 4, wherein said profile section comprises a boss (252, 370) on said outer surface (250a, 368a), wherein said electronic equipment (236, 336) is intended to be housed.

6. The module according to one of the preceding claims, wherein said profile section (126, 226, 326) and said gasket (366) are produced by co-extrusion, multi-injection or overmoulding, or are pre-assembled.

7. The module according to one of the preceding claims, wherein said module comprises a frame (130, 230, 330) surrounding at least partly a fixed window (117, 217, 317), said profile section (126, 226, 326) forming part of said frame or being attached to said frame, and preferably pre-assembled on or partially embedded by the latter.

8. The module (116) according to one of the preceding claims, wherein said support means (134) are at least partly formed in a single part with said profile section (126).

9. The module (116) according to one of the preceding claims, wherein said electronic equipment (136, 236, 336) comprises at least one sensor, preferably contactless or optical.

10. The module (116, 216, 316) according to one of the preceding claims, wherein said electronic equipment (136, 236, 336) is or comprises a camera, an indicator repeater, an information or signal detection sensor, or a proximity radar.

11. A method for producing a motor vehicle, by means of a module (116, 216, 316) according to one of the preceding claims, comprising a step of dismantling said module (116, 216, 316) equipped with said support means (134, 234, 334), or even said electronic equipment (116, 216, 316), on a housing of said vehicle or of a door of said vehicle.

12. The method according to the preceding claim, wherein it comprises a subsequent step of mounting a slide on said door housing, for guiding a sliding window (14, 24) of said door, said slide (18, 28) comprising a vertical strand (18a, 28a) secured to said profile section of said module.

13. A motor vehicle, comprising at least one sealing module according to one of claims 1 to 10.
